# FASCICULE DE BREVET EUROPEEN

(11) **EP 3 999 360 B1**
(45) Date de publication et mention de la délivrance du brevet: **23.04.2025**
(21) Numéro de dépôt: 20751613.9
(22) Date de dépôt: 15.07.2020
(51) Int. Cl.: B60C 11/11, B60C 11/03

(54) **BANDE DE ROULEMENT DE PNEUMATIQUE POUR VEHICULE LOURD DE GENIE CIVIL**
REIFENLAUFFLÄCHE FÜR EIN BAUSTELLENSCHWERLASTFAHRZEUG
TYRE TREAD FOR A HEAVY CONSTRUCTION-PLANT VEHICLE

(30) Priorité: 17.07.2019 FR 1908057
(43) Date de publication de la demande: 25.05.2022
(73) Titulaire: COMPAGNIE GENERALE DES ETABLISSEMENTS MICHELIN, 63000 Clermont-Ferrand (FR)
(72) Inventeur: NUGIER, Franck, 63040 CLERMONT FERRAND Cedex 9 (FR); ROUSSEL, Cécile, 63040 CLERMONT FERRAND Cedex 9 (FR); ROPARS, Olivier, 63040 CLERMONT FERRAND Cedex 9 (FR)
(74) Mandataire: M.F.P. Michelin
(86) Numéro de dépôt international: PCT/FR2020/051269
(87) Numéro de publication internationale: WO 2021/009462

(56) Documents cités:
- WO-A1-2006/057169
- WO-A1-2018/060796
- WO-A1-2019/022128
- CN-A- 109 070 652
- GB-A- 2 065 041
- GB-A- 2 065 571
- US-A1- 2010 236 681
- US-B1- 6 209 602

## Description

La présente invention a pour objet une bande de roulement de pneumatique pour véhicule lourd de génie civil destiné à porter de lourdes charges et à rouler sur des sols irréguliers, agressifs et/ou boueux tels que, par exemple, ceux des mines ou des carrières.

Une bande de roulement comprenant au moins un matériau à base de caoutchouc est destinée à constituer la partie périphérique du pneumatique et à être usée lors de son entrée en contact avec un sol par l'intermédiaire d'une surface de roulement.

Une bande de roulement peut être définie par trois dimensions : une épaisseur, selon une direction radiale, une largeur, selon une direction transversale, et une longueur, selon une direction longitudinale. Pour une bande de roulement intégrée au pneumatique, les directions transversale et longitudinale sont également appelées respectivement direction axiale, car elle est parallèle à l'axe de rotation du pneumatique, et circonférentielle, car elle est tangente à la circonférence du pneumatique selon la direction de roulage du pneumatique.

Pour assurer une performance satisfaisante en adhérence longitudinale, sous couple moteur et sous couple freineur, et en adhérence transversale, il est nécessaire de former, dans la bande de roulement, une sculpture qui est un système de découpures, ou creux, séparant des éléments en relief par rapport à une surface de fond.

Dans le cas d'une bande de roulement de pneumatique pour véhicule lourd de génie civil, les éléments en relief sont souvent des blocs. Un bloc est un volume de matière délimité par une face de contact, contenue dans la surface de roulement, par une surface de fond, et par des faces latérales reliant la face de contact à la surface de fond. La distance radiale entre la face de contact et la surface de fond est appelée hauteur H du bloc. Un bloc est relié à la surface de fond généralement par une surface de raccordement ayant un rayon de raccordement R, par exemple sensiblement égal à 0.25 fois la hauteur H du bloc. Dans ce qui suit, on définit, par convention, une section de base radialement positionnée à l'extérieur de la surface de fond à une distance H' sensiblement égale au rayon de raccordement R, et dont les dimensions géométriques sont facilement mesurables. De plus, pour caractériser de façon simple l'encombrement d'un bloc, un bloc sera considéré comme inscrit géométriquement dans une surface cylindrique enveloppe ayant un axe de révolution radial et une section circulaire de diamètre D.

Dans le contexte de l'invention, la face de contact et la section de base d'un bloc ont préférentiellement des formes polygonales. La face de contact d'un bloc peut être caractérisée géométriquement par sa surface SC et son périmètre PC, ce dernier étant la longueur cumulée des arêtes du polygone délimitant ladite face de contact. La section de base d'un bloc peut être caractérisée géométriquement par sa surface SB et son périmètre PB, ce dernier étant la longueur cumulée des arêtes du polygone délimitant ladite section de base. Toute face latérale peut être caractérisée géométriquement par une trace radiale qui est le profil de son intersection avec un plan radial, contenant la direction radiale.

La bande de roulement, intégrée au pneumatique, est le plus souvent caractérisée géométriquement par une largeur transversale W_{T}, selon la direction transversale, et une épaisseur radiale H_{T}, selon une direction radiale. La largeur transversale W_{T} est définie comme la largeur transversale de la surface de contact de la bande de roulement du pneumatique neuf avec un sol lisse, le pneumatique étant soumis à des conditions de pression et de charge nominales recommandées, par exemple, par la norme E.T.R.T.O. (European Tyre and Rim Technical Organization). L'épaisseur radiale H_{T} est définie, par convention, comme la profondeur radiale maximale mesurée dans les découpures. Ainsi l'épaisseur radiale H_{T} est égale à la hauteur radiale H de bloc maximale. Dans le cas d'un pneumatique pour véhicule lourd de type génie civil, et à titre d'exemple, la largeur transversale W_{T} est au moins égale à 600 mm et l'épaisseur radiale H_{T} est au moins égale à 60 mm, voire 70 mm.

Les conditions usuelles de roulage d'un pneumatique pour véhicule lourd de type génie civil, en particulier pour une chargeuse de carrières ou un engin de mines sous-terraines, sont particulièrement sévères. A titre d'exemple, de tels engins sont destinés à rouler sur des pistes le plus souvent en pente, soit en montée, ce qui nécessite une bonne adhérence en motricité des pneumatiques, soit en descente, ce qui nécessite une bonne adhérence en freinage des pneumatiques. De plus ces pistes sont également souvent virageuses, ce qui nécessite une bonne adhérence transversale des pneumatiques. Enfin les pistes sur lesquelles roulent les véhicules sont généralement constituées de matériaux extraits in situ, par exemple, des roches concassées, compactées et régulièrement arrosées pour garantir la tenue de la couche d'usure de la piste lors du passage des véhicules et sont souvent recouvertes de boue et d'eau : ce qui nécessite à la fois une bonne résistance aux agressions de la bande de roulement, pour garantir une durée de vie satisfaisante, et une bonne capacité à la fois de pénétration et d'évacuation de ce mélange de boue et d'eau par la bande de roulement, pour garantir une adhérence satisfaisante sur sol boueux.

Une bande de roulement, comprenant des blocs, et visant à garantir une bonne adhérence longitudinale, en motricité et en freinage, une adhérence transversale satisfaisante, une capacité d'évacuation de la boue ainsi qu'une résistance satisfaisante aux agressions mécaniques par les matériaux recouvrant les pistes, a déjà été décrite, par exemple dans les documents WO 2014170283 et WO 2014131692. Les documents GB2065571A, GB2065045A et US6209602B1 peuvent également être considérés comme des documents pertinents de l'état de la technique. Les documents GB2065041A, WO 2006/057169 A1, US 2010/236681 A1, WO 2018/060796 A1 et CN 109 070 652 A sont d'autres documents pertinents de l'état de la technique.

Les inventeurs se sont donnés pour objectif d'améliorer encore, pour une bande de roulement de pneumatique pour véhicule lourd de génie civil, comprenant des blocs, le compromis entre l'adhérence, en particulier la motricité sur sol boueux, et la durée de vie vis-à-vis de l'usure, en particulier sur des sols agressifs.

Cet objectif a été atteint par une bande de roulement de pneumatique pour véhicule lourd de génie civil, destinée à entrer en contact avec un sol par l'intermédiaire d'une surface de roulement et comprenant des découpures délimitant des blocs en relief par rapport à une surface de fond, selon une direction radiale,
- tout bloc étant constitué par au moins un matériau à base de caoutchouc et ayant une hauteur radiale H, mesurée entre une face de contact, contenue dans la surface de roulement, et la surface de fond,
- tout bloc comprenant des faces latérales, reliant la face de contact à la surface de fond, et une section de base, parallèle à la surface de fond radialement vers l'extérieur à une distance radiale H' égale à 0.25*H,
- la face de contact ayant une forme polygonale de surface SC et de périmètre PC, et la section de base ayant une forme polygonale de surface SB et de périmètre PB,
- la face de contact de tout bloc ayant une forme polygonale au moins en partie concave, comprenant au moins deux côtés consécutifs formant entre eux un angle A1 intérieur à la forme polygonale supérieur à 180°,
- et la surface SC de la face de contact étant au plus égale à 0.9 fois la surface SB de la section de base.

L'invention décrit, pour une bande de roulement à blocs, une forme de bloc optimisée ayant, comme première caractéristique essentielle, une face de contact ayant une section polygonale au moins en partie concave, c'est-à-dire comprenant au moins deux côtés consécutifs formant entre eux un angle A1 intérieur à la forme polygonale supérieur à 180°. En d'autres termes la section polygonale de la face de contact comprend au moins un sommet rentrant dans la section.

La présence d'une partie concave, dans la face de contact, augmente le périmètre de sa section polygonale par rapport à une section polygonale convexe classique, c'est-à-dire augmente la longueur cumulée d'arêtes de la face de contact. Par définition, une arête est l'intersection, dans la surface de roulement, entre la face de contact et une face latérale du bloc, et correspond donc à un côté de la section polygonale. Il est connu que l'adhérence est d'autant plus élevée que la longueur cumulée d'arêtes de la face de contact est grande. Par conséquent, une face de contact ayant une longueur cumulée de côtés, donc d'arêtes, élevée garantit une meilleure adhérence.

Selon une deuxième caractéristique essentielle de l'invention, la surface SC de la face de contact est au plus égale à 0.9 fois la surface SB de la section de base. Autrement dit, la section de la face de contact est plus petite que celle de la section de base. La section de base est choisie, par convention, radialement à l'extérieur de la surface de fond, à une distance radiale H' égale à 0.25 fois la hauteur H du bloc, qui est la distance radiale entre la face de contact et la surface de fond. Cette section de base a une géométrie plus facilement déterminable, car elle est située radialement à l'extérieur de la surface de raccordement entre les faces latérales du bloc et la surface de fond.

Un différentiel de surfaces entre la face de contact et la section de base garantit, tout d'abord, un meilleur effet de poinçonnement d'un sol meuble ou boueux, une pénétration facilitée dudit sol, et, par conséquent, une motricité améliorée du pneumatique. En outre, un bloc avec une section de base plus massive est plus rigide vis-à-vis des efforts de cisaillement appliqués dans la face de contact, d'où des longueurs de glissement plus petites dans la surface de roulement, et, par conséquent, une meilleure résistance à l'usure. Par ailleurs une géométrie de section qui évolue en fonction de l'usure du pneumatique permet de limiter l'apparition de formes d'usure irrégulières, au cours de la vie du pneumatique. Enfin, une section de base massive garantit un ancrage robuste du bloc à la surface de fond, et donc une meilleure tenue aux arrachements.

Préférentiellement la face de contact de tout bloc a une forme polygonale au moins en partie concave, comprenant au moins trois paires de deux côtés consécutifs formant entre eux un angle (A1, A2, A3) intérieur à la forme polygonale supérieur à 180°. Plus le nombre de parties concaves augmente, plus le périmètre de la face de contact augmente, et plus sa surface diminue, ce qui améliore encore l'adhérence et la motricité. Les inventeurs ont montré qu'à partir de trois parties concaves, les performances recherchées d'adhérence et de motricité atteignent un niveau très intéressant. Le cas particulier d'une section polygonale à trois parties concaves, et plus particulièrement étudié par les inventeurs, est qualifié de bloc tripode.

Encore préférentiellement la surface SC de la face de contact est au moins égale à 0.6 fois la surface SB de la section de base. En deçà de 60% de la surface de la section de base, la surface de la face de contact devient trop petite pour garantir un contact suffisant dans la bande de roulement vis-à-vis de l'adhérence, même si la capacité de poinçonnement est encore meilleure.

La section de base de tout bloc a avantageusement une forme polygonale convexe. Cette forme permet un ancrage robuste, une rigidité élevée du bloc et une moindre sensibilité aux fissures en pied de bloc, sachant que la probabilité d'apparition de fissures est plus importante au niveau d'un angle rentrant, correspondant à une partie concave, qu'au niveau d'un angle sortant, correspondant à une partie convexe.

Selon une variante préférée la section de base de tout bloc a une forme polygonale convexe comprenant au moins six côtés. Un cas particulier plus particulièrement étudié par les inventeurs est une section hexagonale.

Avantageusement le périmètre PC de la face de contact est au moins égal au périmètre PB de la section de base. Cette caractéristique garantit un rapport minimal entre la surface de la face de contact et celle de la section de bas.

Selon un mode de réalisation préféré, tout bloc comprend une succession de portions radiales s'étendant, selon la direction radiale, entre la face de contact et la surface de fond. Les portions les plus radialement extérieures assurent la fonction de pénétration du bloc dans un sol mou, alors que les portions les plus radialement intérieures assurent la fonction d'ancrage et apportent la rigidité au bloc.

Selon une variante préférentielle du mode de réalisation préféré précédent, tout bloc comprend une première portion radiale s'étendant, selon la direction radiale, entre la face de contact et une section intermédiaire, et une deuxième portion radiale s'étendant, selon la direction radiale, entre la section intermédiaire et la surface de fond. Dans ce cas particulier, la pénétration d'un sol meuble est assurée par la portion radialement extérieure, et la rigidification d'ancrage du bloc est assurée par la portion radialement intérieure.

Encore plus particulièrement, dans tout plan radial contenant la direction radiale et interceptant une partie concave de la face de contact, la droite d'intersection dudit plan radial avec la première portion radiale du bloc, radialement extérieure, forme, avec la direction radiale, un angle au moins égal à celui formé par la droite d'intersection dudit plan radial avec la deuxième portion radiale du bloc, radialement intérieure. On obtient ainsi une trace radiale d'une face latérale de bloc à double pente avec un premier angle, pour la portion radialement extérieure, supérieur à un deuxième angle, pour la portion radialement intérieure : ce qui est particulièrement efficace vis-à-vis de la pénétration dans un sol meuble.

Dans le cas d'un bloc à deux portions radiales, la première portion radiale du bloc s'étend, selon la direction radiale, sur une hauteur radiale H1 au moins égale à 0.1 fois et au plus égale à 0.6 fois la hauteur radiale H du bloc, et la deuxième portion radiale du bloc s'étend, selon la direction radiale, sur une hauteur radiale H2=H-H1. Si la hauteur radiale H1 est trop petite, la pénétration en sol meuble est insuffisante. Si la hauteur radiale H1 est trop grande, l'ancrage du bloc est insuffisamment robuste. Cette répartition des hauteurs radiales entre les deux portions radiales de bloc permet donc un compromis satisfaisant entre capacité de pénétration en sol meuble et robustesse de l'ancrage du bloc.

Avantageusement, la bande de roulement ayant une largeur W_{T} et tout bloc, étant inscrit dans une surface cylindrique, ayant un axe de révolution radial et une section circulaire de diamètre D dans tout plan perpendiculaire à l'axe de révolution radial, la section circulaire de la surface cylindrique, dans laquelle le bloc est inscrit, a un diamètre D au moins égal à 0.2 fois et au plus égal à 0.5 fois la largeur W_{T} de la bande de roulement. L'encombrement d'un bloc peut ainsi être caractérisé par le diamètre du plus petit cylindre dans lequel il est inscrit. Pour un diamètre D de cylindre enveloppe en deçà de 0.2 fois la largeur W_{T} de la bande de roulement, le volume du bloc est trop petit pour garantir les performances de motricité et de robustesse recherchées. Pour un diamètre D de cylindre enveloppe au-delà de 0.5 fois la largeur W_{T} de la bande de roulement, le volume du bloc est trop élevé pour permettre le refroidissement de la bande de roulement, d'où un risque de pénalisation en endurance du sommet du pneumatique.

La bande de roulement ayant une partie médiane ayant une largeur W1 au moins égale 0.2 fois et au plus égale à 0.7 fois la largeur W_{T} de la bande de roulement, de préférence au moins égale 0.4 fois et au plus égale à 0.6 fois la largeur W_{T} de la bande de roulement, la partie médiane de la bande de roulement comprend, selon la direction transversale, au moins 1 et au plus 4 rangées longitudinales de blocs, de préférence 2 rangées longitudinales de blocs. Cet intervalle de rangées de blocs permet un compromis satisfaisant entre les diverses performances de la bande de roulement précitées : adhérence, motricité, résistance à l'usure, résistance aux arrachements et capacité de refroidissement.

La partie médiane de la bande de roulement ayant un taux d'entaillement surfacique TES, défini comme le rapport entre la surface de creux et la surface totale de ladite partie médiane, le taux d'entaillement surfacique TES de la partie médiane de la bande de roulement est au moins égal à 30% et au plus égal à 50%. Le taux d'entaillement surfacique TES de la partie médiane définit le taux de creux surfacique de la bande de roulement à l'état neuf, et caractérise le compromis entre l'adhérence et la résistance à l'usure. Dans ce mode de réalisation, la partie médiane est donc moins entaillée en surface que les parties latérales de la bande de roulement.

La partie médiane de la bande de roulement ayant un taux d' entaillement volumique TEV, défini comme le rapport entre le volume de creux et le volume total de ladite partie médiane, le taux d'entaillement volumique TEV de la partie médiane de la bande de roulement est au moins égal à 10% et au plus égal à 30%. Le taux d'entaillement volumique TEV de la partie médiane définit le taux de creux volumique de la bande de roulement à l'état neuf, et caractérise le compromis entre l'adhérence et le volume de gomme à user. Dans ce mode de réalisation, la partie médiane est donc moins entaillée en volume que les parties latérales de la bande de roulement.

L'invention a également pour objet un pneumatique pour véhicule lourd de génie civil comprenant une bande de roulement selon l'un quelconque des modes de réalisation précédemment décrits.

Les caractéristiques de l'invention sont illustrées par les figures 1 à 4 schématiques et non représentées à l'échelle :
- Figure 1: Vue en perspective d'une portion de bande de roulement selon l'invention,
- Figure 2: Vue de dessus d'une portion de bande de roulement selon l'invention,
- Figure 3: Vue en coupe d'une portion de bande de roulement selon l'invention, au niveau des sections de base des blocs,
- Figure 4: Vue en perspective d'un bloc de bande de roulement selon l'invention.

### [Fig 1]

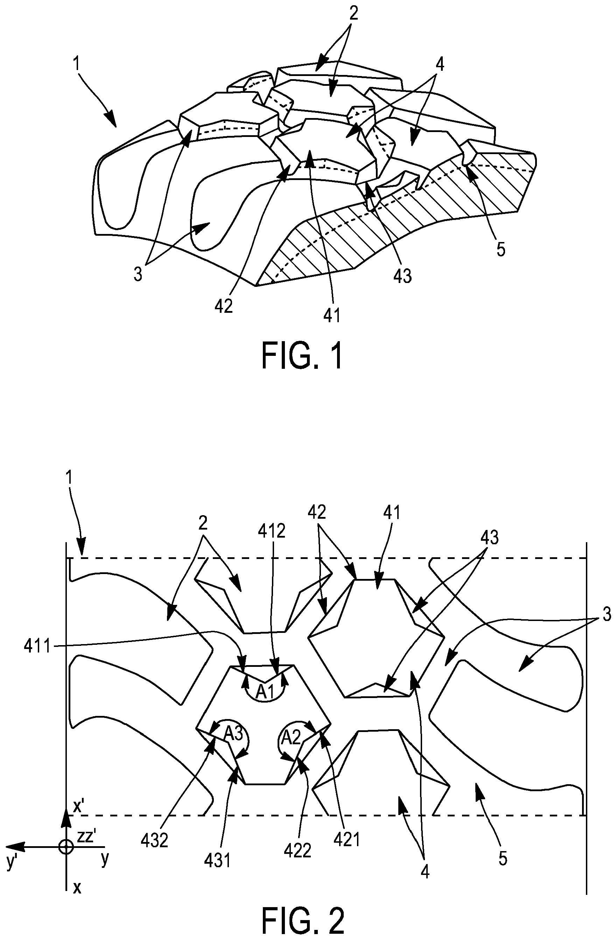

La figure 1 est une vue en perspective d'une portion de bande de roulement selon l'invention. La bande de roulement 1 de pneumatique pour véhicule lourd de génie civil, destinée à entrer en contact avec un sol par l'intermédiaire d'une surface de roulement 2, comprend des découpures 3 délimitant des blocs 4 en relief par rapport à une surface de fond 5. Tout bloc 4 comprend des faces latérales 42, reliant la face de contact 41 à la surface de fond 5, et une section de base 43, parallèle à la surface de fond 5.

### [Fig 2]

La figure 2 est une vue de dessus d'une portion de bande de roulement selon l'invention. Comme vu précédemment, la bande de roulement 1, destinée à entrer en contact avec un sol par l'intermédiaire d'une surface de roulement 2, comprend des découpures 3 délimitant des blocs 4 en relief par rapport à une surface de fond 5, et tout bloc 4 comprend des faces latérales 42, reliant la face de contact 41 à la surface de fond 5, et une section de base 43, parallèle à la surface de fond 5. La face de contact 41 et la section de base 43 ont respectivement une forme polygonale. Dans le mode de réalisation représenté, la face de contact 41 de tout bloc 4 a une forme polygonale au moins en partie concave, comprenant trois paires de deux côtés consécutifs ((411, 412) ; (421, 422) ; (431, 432)) formant entre eux un angle (A1, A2, A3) intérieur à la forme polygonale supérieur à 180°. De plus la section de base 43 de tout bloc 4 a une forme polygonale convexe comprenant six côtés. La bande de roulement ainsi représentée a une sculpture à blocs dits tripodes.

### [Fig 3]

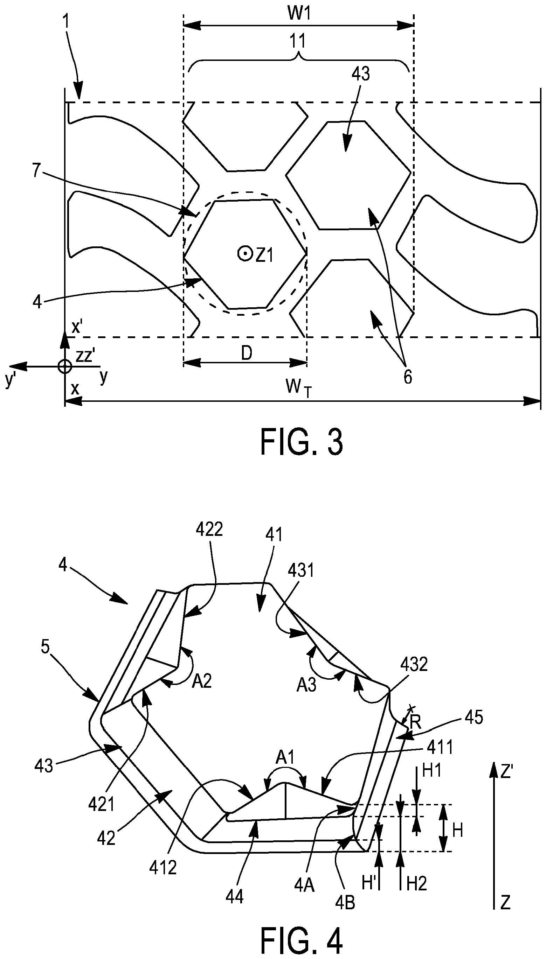

La figure 3 est une vue en coupe d'une portion de bande de roulement selon l'invention, au niveau des sections de base des blocs, dans laquelle est détaillée la partie médiane de la bande de roulement. La bande de roulement 1 a une partie médiane 11 ayant une largeur W1 au moins égale 0.2 fois et au plus égale à 0.7 fois la largeur W_{T} de la bande de roulement, de préférence au moins égale 0.4 fois et au plus égale à 0.6 fois la largeur W_{T} de la bande de roulement. Dans le mode de réalisation représenté, la partie médiane 11 de la bande de roulement 1 comprend, selon la direction transversale XX', 2 rangées 6 de blocs 4. Tout bloc 4 est inscrit dans une surface cylindrique 7, ayant un axe de révolution radial Z1 et une section circulaire de diamètre D dans tout plan perpendiculaire à l'axe de révolution radial Z1. La section circulaire de la surface cylindrique 7, dans laquelle le bloc 4 est inscrit, a un diamètre D au moins égal à 0.2 fois et au plus égal à 0.5 fois la largeur W_{T} de la bande de roulement.

### [Fig 4]

La figure 4 est une vue en perspective d'un bloc de bande de roulement selon l'invention. Le bloc 4, constitué par un matériau à base de caoutchouc, a une hauteur radiale H, mesurée entre une face de contact 41, contenue dans la surface de roulement 2, et la surface de fond 5. Le bloc 4 comprend des faces latérales 42, reliant la face de contact 41 à la surface de fond 5, et une section de base 43, parallèle à la surface de fond 5 radialement vers l'extérieur à une distance radiale H' égale à 0.25*H. La section de base 43 est reliée à la surface de fond 5 par une surface de raccordement 45 de rayon R. La face de contact 41 du bloc 4 a une forme polygonale au moins en partie concave, comprenant trois paires de deux côtés consécutifs ((411, 412) ; (421, 422) ; (431, 432)) formant entre eux un angle (A1, A2, A3) intérieur à la forme polygonale supérieur à 180°. La section de base 43 du bloc 4 a une forme polygonale convexe comprenant au moins six côtés. Le bloc 4 comprend en outre une première portion radiale 4A s'étendant, selon la direction radiale ZZ', entre la face de contact 41 et une section intermédiaire 44, et une deuxième portion radiale 4B s'étendant, selon la direction radiale ZZ', entre la section intermédiaire 44 et la surface de fond 5. La première portion radiale 4A du bloc 4 s'étend, selon la direction radiale ZZ', sur une hauteur radiale H1 au moins égale à 0.1 fois et au plus égale à 0.6 fois la hauteur radiale H du bloc, et la deuxième portion radiale 4B du bloc 4 s'étend, selon la direction radiale ZZ', sur une hauteur radiale H2=H-H1.

Les inventeurs ont plus particulièrement étudié cette invention pour un pneumatique de dimension 35/65 R 33 destiné à être monté sur un tombereau de mines souterraines. Selon la norme ETRTO, un tel pneumatique doit être capable de porter une charge égale à 29000 kg, lorsqu'il est gonflé à une pression égale à 8 bars. Le pneumatique selon l'invention est plus performant puisqu'il est capable de porter une charge égale à 31500 kg, lorsqu'il est gonflé à une pression égale à 7 bars.

Les inventeurs ont comparé, dans la dimension de pneumatique 35/65 R 33, une bande de roulement selon l'invention I, comprenant des blocs avec une face de contact avec trois parties concaves et une section de base convexe hexagonale, et une bande de roulement de référence R, comprenant des blocs avec une face de contact et une section de base toutes deux convexes hexagonales.

Le tableau 1 ci-dessous présente les caractéristiques respectives de la bande de roulement selon l'invention I et de la bande de roulement de référence R :

**[Tableau 1]**

| **Caractéristiques** | **Bande de roulement selon l'invention I** | **Bande de roulement de référence R** |
|---|---|---|
| Largeur de bande de roulement W_{T} | 870 mm | 870 mm |
| Largeur de portion médiane de bande de roulement W1 | 416 mm | 416 mm |
| Rapport W1/W_{T} | 48% | 48% |
| Taux d'entaillement surfacique TES de la portion médiane (état neuf) | 42.5% | 34.5% |
| Taux d'entaillement volumique TEV de la portion médiane (état neuf) | 20% | 19.5% |
| Nombre de rangées longitudinales de blocs dans la portion médiane | 2 | 2 |
| Hauteur radiale H de bloc | 67 mm | 67 mm |
| Hauteur radiale H1 de la première portion radiale de bloc | 11 mm | - |
| Rapport H1/H | 15% | - |
| Hauteur radiale H2 de la deuxième portion radiale de bloc | 56 mm | - |
| Surface SC de la face de contact d'un bloc | 326 mm² | 371 mm² |
| Périmètre PC de la surface de contact d'un bloc | 744 mm | 714 mm |
| Surface SB de la section de base d'un bloc | 425 mm² | 425 mm² |
| Périmètre PB de la section de base d'un bloc | 765 mm² | 765 mm² |
| Rapport SC/SB | 76% | 87% |
| Rapport PC/PB | 97% | 93% |
| Diamètre D de la surface cylindrique enveloppe d'un bloc | 250 mm | 250 mm |
| Rapport D/W_{T} | 29% | 29% |
| Rayon de raccordement R de la surface de raccordement d'un bloc à la surface de fond | 20 mm | 20 mm |

Sur cet exemple, par rapport à la référence, les inventeurs ont ainsi réduit de 12% la surface SC de la face de contact de chaque bloc, augmenté de 4% le périmètre PC de la face de contact de chaque bloc, et augmenté de 8% le taux d'entaillement surfacique TES à taux d'entaillement volumique TEV sensiblement constant (donc à volume de matière constant), sans diminuer la surface de la section de base (donc sans diminuer la robustesse de l'ancrage des blocs). Par conséquent, l'augmentation de la pression au sol, due à la réduction de la surface de la face de contact du bloc, entraîne une amélioration de la pénétration dans le sol, d'où une meilleure motricité sur sol meuble. L'augmentation du périmètre PC de la face de contact du bloc, donc de la longueur cumulée d'arêtes, entraîne une amélioration de l'adhérence sur sol lisse. Enfin, la conservation du volume de matière garantit le maintien de la durée de vie en usure et celui de la robustesse des blocs, par rapport à la référence.

La bande de roulement selon l'invention, développée pour un pneumatique usuel soumis à une pression de gonflage, peut également être utilisée pour un bandage non pneumatique, mais également pour tout ensemble roulant non pneumatique destiné à équiper un véhicule tout terrain, tel que par exemple une chenille.

## Revendications

1. Bande de roulement (1) de pneumatique pour véhicule lourd de génie civil, destinée à entrer en contact avec un sol par l'intermédiaire d'une surface de roulement (2) et comprenant des découpures (3) délimitant des blocs (4) en relief par rapport à une surface de fond (5), selon une direction radiale (ZZ'),
- tout bloc (4) étant constitué par au moins un matériau à base de caoutchouc et ayant une hauteur radiale H, mesurée entre une face de contact (41), contenue dans la surface de roulement (2), et la surface de fond (5),
- tout bloc (4) comprenant des faces latérales (42), reliant la face de contact (41) à la surface de fond (5), et une section de base (43), parallèle à la surface de fond (5) radialement vers l'extérieur à une distance radiale H' égale à 0.25*H,
- la face de contact (41) ayant une forme polygonale de surface SC et de périmètre PC, et la section de base (43) ayant une forme polygonale de surface SB et de périmètre PB,
- la face de contact (41) de tout bloc (4) ayant une forme polygonale au moins en partie concave, comprenant au moins deux côtés consécutifs (411, 412) formant entre eux un angle A1 intérieur à la forme polygonale supérieur à 180°
**caractérisée en ce que** la surface SC de la face de contact (41) est au plus égale à 0.9 fois la surface SB de la section de base (43).

2. Bande de roulement (1) selon la revendication 1, **dans laquelle** la face de contact (41) de tout bloc (4) a une forme polygonale au moins en partie concave, comprenant au moins trois paires de deux côtés consécutifs ((411, 412) ; (421, 422) ; (431, 432)) formant entre eux un angle (A1, A2, A3) intérieur à la forme polygonale supérieur à 180°.

3. Bande de roulement (1) selon l'une des revendications 1 ou 2, **dans laquelle** la surface SC de la face de contact (41) est au moins égale à 0.6 fois la surface SB de la section de base (43).

4. Bande de roulement (1) selon l'une quelconque des revendications 1 à 3, **dans laquelle** la section de base (43) de tout bloc (4) a une forme polygonale convexe.

5. Bande de roulement (1) selon l'une quelconque des revendications 1 à 4, **dans laquelle** la section de base (43) de tout bloc (4) a une forme polygonale convexe comprenant au moins six côtés.

6. Bande de roulement (1) selon l'une quelconque des revendications 1 à 5, **dans laquelle** le périmètre PC de la face de contact (41) est au moins égal au périmètre PB de la section de base (43).

7. Bande de roulement (1) selon l'une quelconque des revendications 1 à 6, **dans laquelle** tout bloc (4) comprend une succession de portions radiales (4A, 4B) s'étendant, selon la direction radiale (ZZ'), entre la face de contact (41) et la surface de fond (5).

8. Bande de roulement (1) selon l'une quelconque des revendications 1 à 7, **dans laquelle** tout bloc (4) comprend une première portion radiale (4A) s'étendant, selon la direction radiale (ZZ'), entre la face de contact (41) et une section intermédiaire (44), et une deuxième portion radiale (4B) s'étendant, selon la direction radiale (ZZ'), entre la section intermédiaire (44) et la surface de fond (5).

9. Bande de roulement (1) selon l'une des revendications 7 ou 8, **dans laquelle** la première portion radiale (4A) du bloc (4) s'étend, selon la direction radiale (ZZ'), sur une hauteur radiale H1 au moins égale à 0.1 fois et au plus égale à 0.6 fois la hauteur radiale H du bloc, et la deuxième portion radiale (4B) du bloc (4) s'étend, selon la direction radiale (ZZ'), sur une hauteur radiale H2=H-H1.

10. Bande de roulement (1) selon l'une quelconque des revendications 1 à 9, la bande de roulement ayant une largeur W_{T} et tout bloc (4) étant inscrit dans une surface cylindrique (7), ayant un axe de révolution radial (Z1) et une section circulaire de diamètre D dans tout plan perpendiculaire à l'axe de révolution radial (Z1), **dans laquelle** la section circulaire de la surface cylindrique (7), dans laquelle le bloc (4) est inscrit, a un diamètre D au moins égal à 0.2 fois et au plus égal à 0.5 fois la largeur W_{T} de la bande de roulement.

11. Bande de roulement (1) selon l'une quelconque des revendications 1 à 10, la bande de roulement ayant une partie médiane (11) ayant une largeur W1 au moins égale 0.2 fois et au plus égale à 0.7 fois la largeur W_{T} de la bande de roulement, de préférence au moins égale 0.4 fois et au plus égale à 0.6 fois la largeur W_{T} de la bande roulement, **dans laquelle** la partie médiane (11) de la bande de roulement (2) comprend, selon la direction transversale (XX'), au moins 1 et au plus 4 rangées longitudinales (6) de blocs (4), de préférence 2 rangées longitudinales (6) de blocs (4).

12. Bande de roulement (1) selon la revendication 11, la partie médiane (11) de la bande de roulement (2) ayant un taux d'entaillement surfacique TES, défini comme le rapport entre la surface de creux et la surface totale de ladite partie médiane (11), **dans laquelle** le taux d'entaillement surfacique TES de la partie médiane (11) de la bande de roulement (2) est au moins égal à 30% et au plus égal à 50%.

13. Bande de roulement (1) selon l'une des revendications 11 ou 12, la partie médiane (11) de la bande de roulement (2) ayant un taux d'entaillement volumique TEV, défini comme le rapport entre le volume de creux et le volume total de ladite partie médiane (11), **dans laquelle** le taux d'entaillement volumique TEV de la partie médiane (11) de la bande de roulement (2) est au moins égal à 10% et au plus égal à 30%.

14. Pneumatique pour véhicule lourd de génie civil comprenant une bande de roulement (1) selon l'une quelconque des revendications 1 à 13.

## Patentansprüche

1. Laufstreifen (1) eines Reifens für ein Baustellenschwerlastfahrzeug, der dazu bestimmt ist, über eine Lauffläche (2) mit einem Boden in Kontakt zu gelangen, und Ausschnitte (3) umfasst, die Blöcke (4) aus Kautschuk begrenzen, die in Bezug auf eine Bodenfläche (5) entlang einer radialen Richtung (ZZ') erhaben sind,
- wobei jeder Block (4) aus mindestens einem Material auf Kautschukbasis besteht und eine radiale Höhe H, gemessen zwischen einer in der Lauffläche (2) enthaltenen Kontaktfläche (41) und der Bodenfläche (5), hat,
- wobei jeder Block (4) Seitenflächen (42) umfasst, die die Kontaktfläche (41) mit der Bodenfläche (5) verbinden, und einen Basisquerschnitt (43), parallel zu der Bodenfläche (5) radial nach außen hin in einem radialen Abstand H' gleich 0,25*H,
- wobei die Kontaktfläche (41) eine polygonale Form mit der Fläche SC und dem Umfang PC hat und wobei der Basisquerschnitt (43) eine polygonale Form mit der Fläche SB und dem Umfang PB hat,
- wobei die Kontaktfläche (41) jedes Blocks (4) eine mindestens teilweise konkave polygonale Form hat, die mindestens zwei aufeinander folgende Seiten (411, 412) umfasst, die untereinander einen Winkel A1 innerhalb der polygonalen Form von mehr als 180° bilden, **dadurch gekennzeichnet, dass** die Fläche SC der Kontaktfläche (41) höchstens das 0,9-Fache der Fläche SB des Basisquerschnitts (43) beträgt.

2. Laufstreifen (1) nach Anspruch 1, wobei die Kontaktfläche (41) jedes Blocks (4) eine mindestens teilweise konkave polygonale Form hat, die mindestens drei Paare aus zwei aufeinanderfolgenden Seiten ((411, 412); (421, 422); (431, 432)) umfasst, die untereinander einen Winkel (A1, A2, A3) innerhalb der polygonalen Form von mehr als 180° bilden.

3. Laufstreifen (1) nach einem der Ansprüche 1 oder 2, wobei die Fläche SC der Kontaktfläche (41) mindestens das 0,6-Fache der Fläche SB des Basisquerschnitts (43) beträgt.

4. Laufstreifen (1) nach einem der Ansprüche 1 bis 3, wobei der Basisquerschnitt (43) jedes Blocks (4) eine konvexe polygonale Form hat.

5. Laufstreifen (1) nach einem der Ansprüche 1 bis 4, wobei der Basisquerschnitt (43) jedes Blocks (4) eine konvexe polygonale Form hat, die mindestens sechs Seiten umfasst.

6. Laufstreifen (1) nach einem der Ansprüche 1 bis 5, wobei der Umfang PC der Kontaktfläche (41) mindestens gleich dem Umfang PB des Basisquerschnitts (43) ist.

7. Laufstreifen (1) nach einem der Ansprüche 1 bis 6, wobei jeder Block (4) eine Abfolge von radialen Abschnitten (4A, 4B) umfasst, die sich entlang der radialen Richtung (ZZ') zwischen der Kontaktfläche (41) und der Bodenfläche (5) erstrecken.

8. Laufstreifen (1) nach einem der Ansprüche 1 bis 7, wobei jeder Block (4) einen ersten radialen Abschnitt (4A), der sich entlang der radialen Richtung (ZZ') zwischen der Kontaktfläche (41) und einem Zwischenquerschnitt (44) erstreckt, und einen zweiten radialen Abschnitt (4B), der sich entlang der radialen Richtung (ZZ') zwischen dem Zwischenquerschnitt (44) und der Bodenfläche (5) erstreckt, umfasst.

9. Laufstreifen (1) nach einem der Ansprüche 7 oder 8, wobei sich der erste radiale Abschnitt (4A) des Blocks (4) entlang der radialen Richtung (ZZ') über eine radiale Höhe H1 erstreckt, die mindestens das 0,1-Fache und höchstens das 0,6-Fache der radialen Höhe H des Blocks beträgt, und sich der zweite radiale Abschnitt (4B) des Blocks (4) entlang der radialen Richtung (ZZ') über eine radiale Höhe H2=H-H1 erstreckt.

10. Laufstreifen (1) nach einem der Ansprüche 1 bis 9, wobei der Laufstreifen eine Breite W_{T} hat und wobei jeder Block (4) in eine zylindrische Fläche (7) einbeschrieben ist, die eine radiale Rotationsachse (Z1) und einen kreisförmigen Querschnitt mit dem Durchmesser D in jeder zu der radialen Rotationsachse (Z1) senkrechten Ebene hat, wobei der kreisförmige Querschnitt der zylindrischen Fläche (7), in die der Block (4) einbeschrieben ist, einen Durchmesser D von mindestens dem 0,2-Fachen und höchstens dem 0,5-Fachen der Breite W_{T} des Laufstreifens hat.

11. Laufstreifen (1) nach einem der Ansprüche 1 bis 10, wobei der Laufstreifen einen Mittelteil (11) hat, der eine Breite W1 von mindestens dem 0,2-Fachen und höchstens dem 0,7-Fachen der Breite W_{T} des Laufstreifens, bevorzugt von mindestens dem 0,4-Fachen und höchstens dem 0,6-Fachen der Breite W_{T} des Laufstreifens, hat, wobei der Mittelteil (11) des Laufstreifens (2) entlang der Querrichtung (XX') mindestens 1 und höchstens 4 Längsreihen (6) von Blöcken (4), bevorzugt 2 Längsreichen (6) von Blöcken (4), umfasst.

12. Laufstreifen (1) nach Anspruch 11, wobei der Mitteilteil (11) des Laufstreifens (2) einen flächenbezogenen Negativprofilanteil TES, definiert als das Verhältnis zwischen der Fläche der Vertiefungen und der Gesamtfläche des Mittelteils (11), hat, wobei der flächenbezogene Negativprofilanteil TES des Mittelteils (11) des Laufstreifens (2) mindestens 30 % und höchstens 50 % beträgt.

13. Laufstreifen (1) nach einem der Ansprüche 11 oder 12, wobei der Mitteilteil (11) des Laufstreifens (2) einen volumenbezogenen Negativprofilanteil TEV, definiert als das Verhältnis zwischen dem Volumen der Vertiefungen und dem Gesamtvolumen des Mittelteils (11), hat, wobei der volumenbezogene Negativprofilanteil TEV des Mittelteils (11) des Laufstreifens (2) mindestens 10 % und höchstens 30 % beträgt.

14. Reifen für ein Baustellenschwerlastfahrzeug, der einen Laufstreifen (1) nach einem der Ansprüche 1 bis 13 umfasst.

## Claims

1. Tyre tread (1) for a heavy construction-plant vehicle, which tread is intended to come into contact with the ground via a tread surface (2) and comprises cuts (3) delimiting blocks (4) that are raised with respect to a bottom surface (5), in a radial direction (ZZ'),
- any block (4) being made up of at least one rubber-based material and having a radial height H, which is measured between a contact face (41), contained in the tread surface (2), and the bottom surface (5),
- any block (4) comprising lateral faces (42), which connect the contact face (41) to the bottom surface (5), and a base section (43), which is parallel to the bottom surface (5) radially towards the outside at a radial distance H' equal to 0.25*H,
- the contact face (41) having a polygonal shape of surface area SC and perimeter PC, and the base section (43) having a polygonal shape of surface area SB and perimeter PB,
the contact face (41) of any block (4) has a polygonal shape that is at least partially concave, comprising at least two consecutive sides (411, 412) that form between them an interior angle A1 of the polygonal shape that is greater than 180°,
**characterized in that** the surface area SC of the contact face (41) is at most equal to 0.9 times the surface area SB of the base section (43).

2. Tread (1) according to Claim 1, **wherein** the contact face (41) of any block (4) has a polygonal shape that is at least partially concave, comprising at least three pairs of two consecutive sides ((411, 412); (421, 422); (431, 432)) that form between them an interior angle (A1, A2, A3) of the polygonal shape that is greater than 180°.

3. Tread (1) according to either of Claims 1 and 2, **wherein** the surface area SC of the contact face (41) is at least equal to 0.6 times the surface area SB of the base section (43).

4. Tread (1) according to any one of Claims 1 to 3, **wherein** the base section (43) of any block (4) has a convex polygonal shape.

5. Tread (1) according to any one of Claims 1 to 4, **wherein** the base section (43) of any block (4) has a convex polygonal shape comprising at least six sides.

6. Tread (1) according to any one of Claims 1 to 5, **wherein** the perimeter PC of the contact face (41) is at least equal to the perimeter PB of the base section (43).

7. Tread (1) according to any one of Claims 1 to 6, **wherein** any block (4) comprises a succession of radial portions (4A, 4B) extending, in the radial direction (ZZ'), between the contact face (41) and the bottom surface (5).

8. Tread (1) according to any one of Claims 1 to 7, **wherein** any block (4) comprises a first radial portion (4A) extending, in the radial direction (ZZ'), between the contact face (41) and an intermediate section (44), and a second radial portion (4B) extending, in the radial direction (ZZ'), between the intermediate section (44) and the bottom surface (5).

9. Tread (1) according to either of Claims 7 and 8, wherein the first radial portion (4A) of the block (4) extends, in the radial direction (ZZ'), over a radial height H1 at least equal to 0.1 times and at most equal to 0.6 times the radial height H of the block, and the second radial portion (4B) of the block (4) extends, in the radial direction (ZZ'), over a radial height H2=H-H1.

10. Tread (1) according to any one of Claims 1 to 9, the tread having a width W_{T} and any block (4) being inscribed in a cylindrical surface (7), which has a radial axis of revolution (Z1) and a circular section of diameter D in any plane perpendicular to the radial axis of revolution (Z1), wherein the circular section of the cylindrical surface (7) in which the block (4) is inscribed has a diameter D at least equal to 0.2 times and at most equal to 0.5 times the width W_{T} of the tread.

11. Tread (1) according to any one of Claims 1 to 10, the tread having a middle part (11) having a width W1 at least equal to 0.2 times and at most equal to 0.7 times the width W_{T} of the tread, preferably at least equal to 0.4 times and at most equal to 0.6 times the width W_{T} of the tread, wherein the middle part (11) of the tread (2) comprises, in the transverse direction (XX'), at least one and at most four longitudinal rows (6) of blocks (4), preferably two longitudinal rows (6) of blocks (4).

12. Tread (1) according to Claim 11, the middle part (11) of the tread (2) having a surface void ratio TES, defined as the ratio between the voids surface area and the total surface area of said middle part (11), **wherein** the surface void ratio TES of the middle part (11) of the tread (2) is at least equal to 30% and at most equal to 50%.

13. Tread (1) according to either of Claims 11 and 12, the middle part (11) of the tread (2) having a volumetric void ratio TEV, defined as the ratio between the voids volume and the total volume of said middle part (11), **wherein** the volumetric void ratio TEV of the middle part (11) of the tread (2) is at least equal to 10% and at most equal to 30%.

14. Tyre for a heavy construction-plant vehicle, which tyre comprises a tread (1) according to any one of Claims 1 to 13.
